# EUROPÄISCHE PATENTSCHRIFT

(11) **EP 0 890 498 B1**
(45) Veröffentlichungstag und Bekanntmachung des Hinweises auf die Patenterteilung: **02.11.2000**
(21) Anmeldenummer: 98112272.4
(22) Anmeldetag: 02.07.1998
(51) Int. Cl.: B62D 1/16, B60R 21/05

(54) **Lenksäule in einem Kraftfahrzeug**
Steering column in a motor vehicle
Colonne de direction dans un véhicule à moteur

(30) Priorität: 12.07.1997 DE 19729893
(43) Veröffentlichungstag der Anmeldung: 13.01.1999
(73) Patentinhaber: Micro Compact Car smart GmbH, 71272 Renningen (DE)
(72) Erfinder: Fischer, Thomas, 75365 Calw (DE); Ganser, Martin, 71263 Weil der Stadt (DE); Schick, Ulrich, 72202 Nagold-Vollmaringen (DE)
(74) Vertreter: Weiss, Klaus

(56) Entgegenhaltungen:
- GB-A- 2 084 522
- US-A- 4 411 331
- US-A- 5 067 747

## Beschreibung

Die Erfindung betrifft eine Lenksäule in einem Kraftfahrzeug gemäß dem Oberbegriff des Anspruches 1.

In der GB 2 084 522 A, die im Oberbegriff des Anspruches 1 berücksichtigt ist, ist eine Lenksäulenverkleidung beschrieben, die bei ihrer Vorwärtsbewegung durch den Aufprall des Fahrers mit der oberen Schale an der Armaturentafel anschlägt und sich nicht mehr als Ganzes weiter nach vorne verschieben läßt. Die obere Schale der Lenksäulenverkleidung wird verformt und zwischen der Armaturentafel und dem Lenkrad eingeklemmt, wo sie blockbildend die weitere Verschiebung des Lenkrades behindert.

Aus der DE 31 28 785 A1 ist eine Lenksäule bekannt, deren Lenkwelle im oberen Bereich, anschließend an das Lenkrad, von einem schalenförmigen Mantel umfaßt ist. Bei einem Crash und einer daraus resultierenden Verschiebung des Lenkrades und der Lenkwelle in Fahrzeugfrontrichtung durch den Aufprall des Fahrers wird hier die Instrumententafel zerbrochen, um deren Widerstand gegen die Verschiebung der Lenkwelle mit dem Mantel zu verringern. Weiterhin ist es bekannt, daß der schalenförmige Mantel bei der Verschiebung des Lenkrades und der Lenkwelle unkontrolliert zerbricht.

Die US 5,067,747 beschreibt eine Verkleidung für eine Lenksäule, wobei die Verkleidung im Crash-Fall bei Aufprall des Fahrers auf das Lenkrad teleskopartig in Axialrichtung der Lenksäule in eine hierfür vorgesehene Öffnung verschoben wird, wo sie einen Block bildet.

Weiterhin sind in der DE 31 27 172 C2 Schwächungsbereiche in einer Instrumententafel beschrieben, in denen sich die Instrumententafel beim Aufprall des Fahrzeuginsassen verformt, oder in denen die Instrumententafel bricht. Die Schwächungsbereiche sollen hier durch einen dünneren Querschnitt oder durch das Material durchsetzende Schlitze ausgebildet werden.

Eine weitere Lenksäulenverkleidung ist in der US 4,411,331 beschrieben. Diese ist zweiteilig mit einem oberen und einem unteren Teil ausgebildet, die im Crash-Fall unkontrolliert deformiert werden.

Die Aufgabe der Erfindung besteht darin, eine gattungsgemäße Lenksäule derart auszubilden, daß bei einer Crashverschiebung des Lenkrades in Richtung Fahrzeugfront eine frühzeitige Blockbildung durch die Ummantelung der Lenkwelle vermieden werden kann.

Die Aufgabe wird durch die kennzeichnenden Merkmale des Patentanspruches 1 gelöst.

Bei einer Lenksäule in einem Kraftfahrzeug ist die Lenkwelle im Anschluß an das Lenkrad von einem Schalenelement umfaßt. Da die Lenkwelle beim Crash aufgrund der Belastung des Lenkrades durch den Fahrer axial in Fahrzeugfrontrichtung verschiebbar ist, wird das Schalenelement zur Verringerung des Verschiebewiderstandes etwa in Axialrichtung der Lenkwelle zumindest zweigeteilt ausgebildet, und werden das Lenkrad bzw. die Lenkwelle die Schalenteile des Schalenelementes bei der Axialverschiebung gezielt radial nach außen auseinanderdrücken. Um dies zu erreichen, kann zumindest ein Schalenteil eine ansteigende Abweisschräge aufweisen, auf die ein Fortsatz am Lenkrad bzw. an der Lenkwelle bei der Axialverschiebung einwirkt.

Ein Schalenteil kann als Verkleidungsteil für die Lenkwelle dienen, und das andere Schalenteil eine Lagerschale für die Lenkwelle sowie eine Halterschale zur Lagerung von Bedienhebelschaltern oder zur Lagerung eines weiteren Verkleidungsteiles bilden, welches kostengünstig einstückig ausgebildet ist und bei der Beaufschlagung durch das Lenkrad bzw. durch die Lenkwelle ebenfalls zur Reduzierung des Verschiebewiderstandes in einem vorgefertigten Schwächungsbereich zwischen Lagerschale und Halterschale auftrennbar ist.

Der auf eine Abweisschräge einwirkende Fortsatz kann kostengünstig einstückig am Stator der Kontakteinheit am Lenkrad ausgebildet werden, und der Stator zudem durch an einem Schalenteil angeformte Fixierbolzen unverdrehbar gehalten sein.

Um zu gewährleisten, daß die Schalenteile um die Lenkwelle beim üblichen Fahrbetrieb fest verbunden bleiben, bei einem Crash aber in jedem Falle auseinandergedrückt werden können, sind diese durch eine Schraubverbindung verbunden, bei der die Schraubenköpfe jeweils einen Wandabschnitt eines Schalenteiles hintergreifen, welcher beim Auseinanderdrücken der Schalenteile durch den Zug an der Schraube gezielt herausgebrochen werden kann. In einer fertigungsgünstigen Ausführung sind die Wandabschnitte deshalb über Stege angeformt.

Eine weitere Möglichkeit, den Verschiebewiderstand durch die Schalenteile zu reduzieren, besteht darin, in ein Schalenteil in Verschieberichtung des Lenkrades eine Sollbruchlinie einzuformen, entlang der das Schalenteil aufgrund einer Biegebelastung durch das Lenkrad bzw. durch die Lenkwelle aufgebrochen werden kann. Hierzu kann die Sollbruchlinie durch einen dem Stator der Kontakteinheit am Lenkrad zugeordneten Fortsatz biegend beaufschlagt werden.

Weitere Vorteile und Ausgestaltungen gehen aus den Unteransprüchen und der Beschreibung hervor.

Die Erfindung ist nachstehend anhand einer Zeichnung näher beschrieben.

Es zeigen:
- Fig. 1: in einer Seitenansicht eine Prinzipdarstellung einer erfindungsgemäßen Lenksäule,
- Fig. 2: hierzu seitenverkehrt die Innenansicht eines untenliegenden Verkleidungsteiles, und
- Fig. 3: die Außenansicht einer obenliegenden Halterschale und Lagerschale.

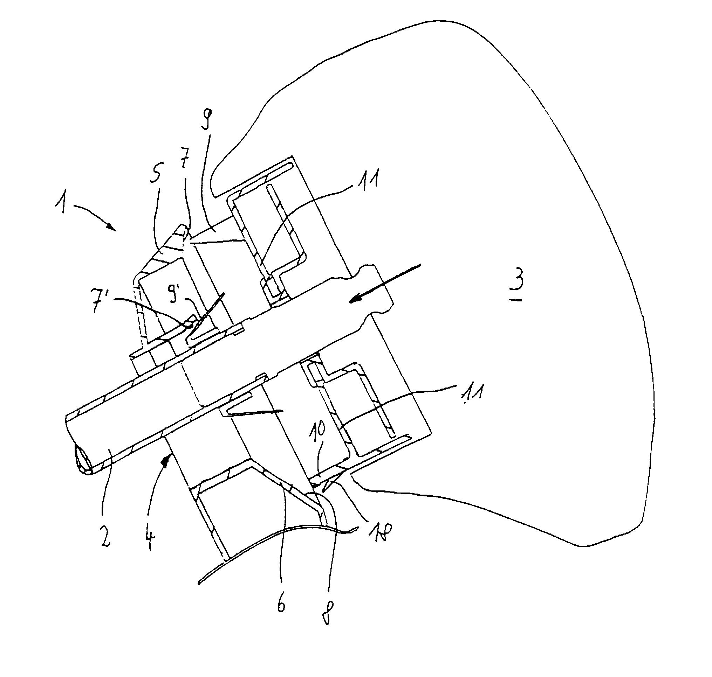

Die Fig. 1 zeigt in einer stark vereinfachten Skizze eine Lenksäule 1 für ein Kraftfahrzeug, mit einer Lenkwelle 2, welche im Anschluß an das Lenkrad 3 von einem zweiteiligen Schalenelement 4 umgeben ist. Das Schalenelement 4 kann zur Verkleidung der Lenkwelle 2 wie auch als Lagerung für die dort angeordneten Hebel oder Schalter dienen, wobei es ebenfalls als Träger für ein Verkleidungsteil dienen kann.

Bei einem Fahrzeugcrash drückt ein Fahrer des Kraftfahrzeuges, in Richtung des eingezeichneten Pfeiles, direkt oder über den ausgelösten Fahrerairbag auf das Lenkrad 3 und auch in Axialrichtung auf die Lenkwelle 2, die hierdurch in Fahrzeugfrontrichtung verschoben werden, so daß die Lenkwelle 2 mit dem Lenkrad 3 keine den Fahrer schädigende Gegenkraft aufbringen kann.

Damit auch das Schalenelement 4 die Axialverschiebung der Lenkwelle 2 und des Lenkrades 3 nicht behindert, ist dieses etwa in Axialrichtung zumindest zweigeteilt ausgebildet, wobei diese Schalenteile 5 und 6 durch das Lenkrad 3 bzw. die Lenkwelle 2 bei deren Verschiebung radial nach außen auseinandergedrückt werden.

Hierzu weisen das im Kraftfahrzeug obenliegende Schalenteil 5 und das untenliegende Schalenteil 6 in ihrem dem Lenkrad 3 zugeordneten Endbereich jeweils eine Abweisschräge 7 bzw. 8 auf, auf die bei der Verschiebung des Lenkrades 3 ein Fortsatz 9 bzw. 10 am Stator 11 der Kontakteinheit des Lenkrades trifft, und durch die bei weiterer Axialverschiebung des Lenkrades 3 die Schalenteile 5 bzw. 6 nach außen weggedrückt werden, so daß sie die weitere Verschiebung des Lenkrades 3 und der Lenkwelle 2 nicht behindern. Eine entsprechende Wirkung kann durch eine Abweisschräge 7' am Schalenteil 5 erzielt werden, die bei der Verschiebung der Lenkwelle 2 durch einen Fortsatz 9' an der Lenkwelle beaufschlagt wird.

Eine einteilige Anformung eines derartigen Fortsatzes 9 und 10 am Stator 11 aus Kunststoff der Kontakteinheit am Lenkrad ist besonders kostengünstig herzustellen.

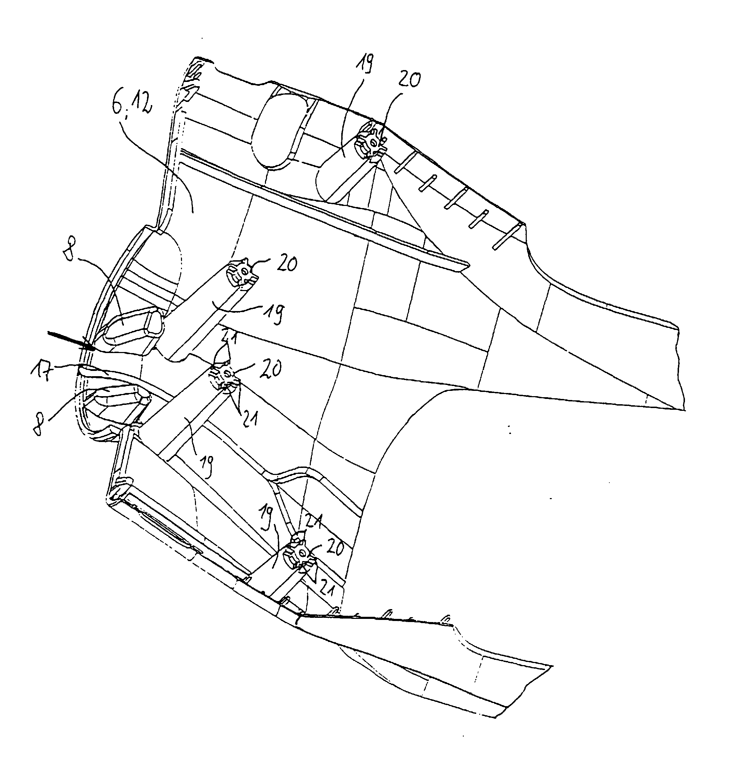

Wie die Fig. 2 zeigt, ist das untere Schalenteil 6 als Verkleidungsteil 12 ausgebildet, welches die Lenkwelle 2 von unten und bis zur Hälfte der Seiten schützend überdeckt. Das Verkleidungsteil 12 weist gegen das im Einbauzustand an der linken Seite anschließende Lenkrad 3 zwei Abweisschrägen 8 auf, auf die bei der Crashverschiebung des Lenkrades 3 in Richtung des Pfeiles der Fortsatz 10 am Lenkradstator 11 treffen kann, wodurch das Verkleidungsteil 12 nach unten weggedrückt wird.

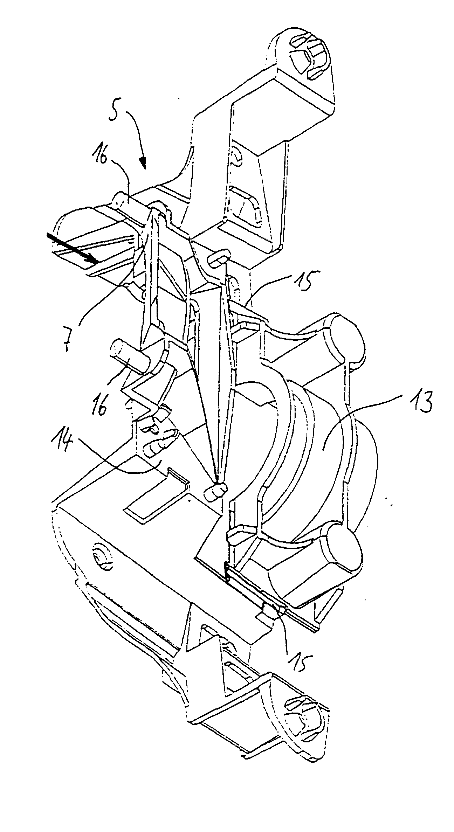

Das obenliegende Schalenteil 5 umfaßt, wie es in der Fig. 3 dargestellt ist, eine Lagerschale 13 für die Lenkwelle 2 und eine Halterschale 14 zur Lagerung von Bedienhebelschaltern, wie Blinkerhebel und Scheibenwischerschalthebel, und gegebenenfalls zur Lagerung von Verkleidungsteilen, wobei diese Schalen 13, 14 die andere Hälfte der Lenkwelle 2 von oben her bis zum Verkleidungsteil 12 umschließen. Die Lagerschale 13 und die Halterschale 14 sind kostengünstig einstückig miteinander verbunden hergestellt. Auf die Abweisschräge 7 an der Halterschale 14 trifft bei der Crashverschiebung des Lenkrades 3 in Richtung des Pfeiles der am Stator 11 der Kontakteinheit obere Fortsatz 9 und drückt die Halterschale 14 nach oben. Dabei bricht die Halterschale 14 in einem vorgeformten linienförmigen Schwächungsbereich 15 von der Lagerschale 13 ab, die weiterhin die Lenkwelle 2 umfaßt.

An der Halterschale 14 sind außerdem Fixierbolzen 16 angeformt, die mit Aufnahmen am Stator 11 der Kontakteinheit am Lenkrad korrespondieren, durch die der Stator 11 unverdrehbar gehalten wird. Diese Verbindung wird durch die Verschiebung des Lenkrades 3 bzw. der Lenkwelle 2 außer Eingriff gebracht.

Das Verkleidunssteil 12 in Fig. 2 weist darüber hinaus in Verschieberichtung des Lenkrades 3 eine Sollbruchlinie 17 auf, in der das Verkleidungsteil 12 aufgrund einer Biegebelastung durch das Lenkrad 3 bzw. die Lenkwelle 2 aufbrechbar ist. Ein weiterer Fortsatz 18 am Lenkradstator 11 kann diese Biegebelastung ausüben, so daß das Verkleidungsteil 12 zusätzlich in zwei Hälften aufgetrennt wird und die Crashverschiebung des Lenkrades 3 auch bei weiter Verschiebung nicht behindert.

Die Schalenteile 5 und 6 werden durch eine Schraubverbindung miteinander verbunden. Das Verkleidungsteil 12 weist hierzu an seiner Wand angeformte Dome 19 auf, in die von unten her jeweils eine hier nicht dargestellte Schraube eingesetzt wird, die das Verkleidungsteil 12 mit der Halterschale 14 und in den seitlichen Domen auch mit der Instrumententafel verbinden. Dabei weist der Wandabschnitt 20 am Ende jedes Domes 19, an dem der Schraubenkopf von unten anliegt, die Besonderheit auf, daß er über Stege 21 am Dom 19 des Verkleidungsteiles 12 angeformt ist, welche beim Auseinanderdrücken der Schalenteile 5 und 6 bei der Crashverschiebung des Lenkrades 3 herausgebrochen werden, so daß die Verbindung nicht mehr besteht und das Auseinanderdrücken der Schalenteile 5 und 6 nicht behindert wird.

## Patentansprüche

1. Lenksäule (1) in einem Kraftfahrzeug, mit einer bei einem Crash durch Belastung eines Lenkrades (3) axial in Fahrzeugfrontrichtung verschiebbaren Lenkwelle (2), welche im Anschluß an das Lenkrad (3) von einem Schalenelement (4) umfaßt ist, das etwa in Axialrichtung der Lenkwelle (2) betrachtet zumindest zweigeteilt ausgebildet ist und durch die Verschiebung des Lenkrades (3) zur Verringerung des Verschiebewiderstandes teilbar ist,
**dadurch gekennzeichnet,**
daß das Lenkrad (3) beziehungsweise die Lenkwelle (2) die Schalenteile (5, 6) des Schalenelementes (4) bei der Axialverschiebung radial nach außen auseinanderdrücken.

2. Lenksäule nach Anspruch 1,
**dadurch gekennzeichnet,**
daß zumindest eines der Schalenteile (5, 6) eine Abweisschräge (7, 7`, 8) aufweist, auf die ein Fortsatz (9, 9`, 10) am Lenkrad (3) beziehungsweise an der Lenkwelle (2) bei der Axialverschiebung einwirkt.

3. Lenksäule nach Anspruch 1,
**dadurch gekennzeichnet,**
daß ein Schalenteil (6) als Verkleidungsteil (12) für die Lenkwelle (2) dient.

4. Lenksäule nach Anspruch 1,
**dadurch gekennzeichnet,**
daß eines (5) der Schalenteile (5, 6) derart gebildet ist, daß eine Lagerschale (13) für die Lenkwelle (2) und eine Halterschale (14) zur Lagerung von Bedienhebelschaltern einstückig miteinander verbunden sind.

5. Lenksäule nach Anspruch 4,
**dadurch gekennzeichnet,**
daß bei der Beaufschlagung des Schalenteiles (5) die Lagerschale (13) und die Halterschale (14) in einem vorgefertigten Schwächungsbereich (15) voneinander trennbar sind.

6. Lenksäule nach Anspruch 2,
**dadurch gekennzeichnet,**
daß der Fortsatz (9, 10) am Stator (11) der Kontakteinheit des Lenkrades (3) angeordnet ist.

7. Lenksäule nach Anspruch 6,
**dadurch gekennzeichnet,**
daß für jede Abweisschräge (7, 8) an einem Schalenteil (5, 6) am Stator (11) der Kontakteinheit des Lenkrades (3) ein Fortsatz (9, 10) angeformt ist.

8. Lenksäule nach Anspruch 6,
**dadurch gekennzeichnet,**
daß der Stator (11) der Kontakteinheit durch an einem Schalenteil (5) angeformte Fixierbolzen (16) unverdrehbar gehalten ist.

9. Lenksäule nach Anspruch 1,
**dadurch gekennzeichnet,**
daß die Schalenteile (5, 6) durch eine Schraubverbindung verbunden sind, wobei die Schraubenköpfe einen Wandabschnitt (20) eines Schalenteiles (6) hintergreifen, und diese Wandabschnitte (20) beim Auseinanderdrücken der Schalenteile (5, 6) aufgrund einer Materialschwächung herausbrechbar sind.

10. Lenksäule nach Anspruch 9,
**dadurch gekennzeichnet,**
daß der Wandabschnitt (20) zur Abstützung des Schraubenkopfes über Stege (21) am Schalenteil (6) festgelegt ist.

11. Lenksäule nach Anspruch 1,
**dadurch gekennzeichnet,**
daß zumindest ein Schalenteil (6) in Verschieberichtung des Lenkrades (3) eine Sollbruchlinie (17) aufweist, in der das Schalenteil (6) aufgrund einer Biegebelastung durch das Lenkrad (3) beziehungsweise durch die Lenkwelle (2) aufbrechbar ist.

12. Lenksäule nach Anspruch 11,
**dadurch gekennzeichnet,**
daß die Sollbruchlinie (17) durch einen dem Stator (11) der Kontakteinheit des Lenkrades zugeordneten Fortsatz (18) biegend beaufschlagt wird.

## Claims

1. A steering column (1) in a motor vehicle, with a steering shaft (2) capable of sliding -axially forward in a direction towards the vehicle front if load is applied to the steering wheel (3) in the event of a collision, surrounded by a shell element (4) in the area adjoining the steering wheel (3) which consists of at least two parts as viewed in a more or less axial direction of the steering shaft (2) and which is separable due to a displacement of the steering wheel (3) in order to reduce resistance to displacement,
**characterised in that**
the steering wheel (3) and the steering shaft (2) push the shell components (5, 6) of the shell element (4) radially apart from one another in an outward direction in the event of axial displacement.

2. A steering column as claimed in claim 1,
**characterised in that**
at least one of the shell components (5, 6) has a deflector incline (7, 7', 8) on which a projecting shoulder (9, 9', 10) on the steering wheels (3) or on the steering shaft (2) acts in the event of axial displacement.

3. A steering column as claimed in claim 1,
**characterised in that**
a shell component (6) is used as a cladding component (12) for the steering shaft (2) :

4. A steering column as claimed in claim 1,
**characterised in that**
one of the shell components (5, 6) is designed so that a mounting shell (13) for the steering shaft (2) and a holder shell (14) for mounting operator lever switches are joined to one another in a single piece.

5. A steering column as claimed in claim 4,
**characterised in that**
if pressure is applied to the shell component (5), the mounting shell (13) and the holder shell (14) can be separated from one another at a pre-fabricated region of reduced thickness (15).

6. A steering column as claimed in claim 2,
**characterised in that**
the projecting shoulder (9, 10) is arranged on the stator (11) of the contact unit of the steering wheel (3).

7. A steering column as claimed in claim 6,
**characterised in that**
a projecting shoulder (9, 10) is formed on one shell component (5, 6) on the stator (11) of the contact unit of the steering wheel (3) for each deflector incline (7, 8).

8. A steering column as claimed in claim 6,
**characterised in that**
the stator (11) of the contact unit is retained by means of fixing bolts (16) on a shell component (5) so that they are prevented from rotating.

9. A steering column as claimed in claim 1,
**characterised in that**
the shell components (5, 6) are joined by means of a screw connection, the screw heads engaging behind a wall portion (20) of a shell component (6) and these wall portions (20) can be broken away by pushing the shell components (5, 6) apart from one another due to a region of thinner material.

10. A steering column as claimed in claim 9,
**characterised in that**
the wall portion (20) which supports the screw head by means of lands (21) is permanently fixed to the shell component (6).

11. A steering column as claimed in claim 1,
**characterised in that**
at least one shell component (6) has a breaking line (17) in the direction of displacement of the steering wheel (3) in which the shell component (6) can be broken off due to a bending load applied by the steering wheel (2) or by the steering shaft (2).

12. A steering column as claimed in claim 11,
**characterised in that**
bending pressure is applied to the breaking line (17) by means of a projecting shoulder (18) cooperating with the stator (11) of the contact unit of the steering wheel.

## Revendications

1. Colonne de direction (1) dans un véhicule automobile, avec un arbre de direction (2) déplaçable axialement dans la direction de l'avant du véhicule en cas de collision ou écrasement, par sollicitation d'un volant (3), arbre de direction englobé, suite au volant (3), par un élément formant coque (4), qui est réalisé au moins en deux parties, en observant en direction axiale de l'arbre de direction (2), et est subdivisable par le déplacement du volant (3), dans le but de diminuer la résistance au déplacement,
caractérisée en ce que
le volant (3), respectivement l'arbre de direction (2), écarte radialement les unes des autres vers l'extérieur les parties formant coque (5, 6) de l'élément formant coque (4) en cas de déplacement axial.

2. Colonne de direction 'selon la revendication 1, caractérisée en ce qu'au moins l'une des parties formant coque (5, 6) présente une pente de déviation (7, 7', 8) sur laquelle agit un prolongement (9, 9', 10) ménagé sur le volant (3), respectivement sur l'arbre de direction (2), en cas de déplacement axial.

3. Colonne de direction selon la revendication 1, caractérisée en ce qu'une partie formant coque (6) sert de partie d'habillage (12) à l'arbre de direction (2).

4. Colonne de direction selon la revendication 1, caractérisée en ce que l'une des parties formant coque (5, 6) est formée de manière qu'une coque de palier (13), destinée à l'arbre de direction (2), et une coque support (14), destinée au tourillonement des interrupteurs à levier de manoeuvre, soient reliées ensemble d'une seule pièce.

5. Colonne de direction selon la revendication 4, caractérisée en ce que, lors de la sollicitation de la partie formant coque (5), la coque formant palier (13) et la coque formant support (14) sont susceptibles d'être séparées l'une de l'autre, dans une zone d'affaiblissement (15) préfabriquée.

6. Colonne de direction selon la revendication 2, caractérisée en ce que le prolongement (9, 10) est disposé sur le stator (11) de l'unité de contact du volant (3).

7. Colonne de direction selon la revendication 6, caractérisée en ce que, pour chaque pente de déviations (7, 8) sur une partie formant coque (5, 6), un prolongement (9, 10), est formé d'un seul tenant sur le stator (11) de l'unité de contact du volant (3).

8. Colonne de direction selon la revendication 6, caractérisée en ce que le stator (11) de l'unité de contact est maintenu immobile en rotation au moyen d'un boulon ou téton de fixation (16) formé d'un seul tenant sur une partie formant coque (5).

9. Colonne de direction selon la revendication 1, caractérisée en ce que les parties formant coquet (5, 6) sont reliées au moyen d'une liaison vissée, les têtes de vis saisissant par l'arrière un tronçon de paroi (20) d'une partie formant coque (6) et ces tronçons de paroi (20) étant susceptibles d'être séparés par rupture, du fait d'un affaiblissement dans le matériau, lors de l'écartement les unes les autres par pressage des parties formant coque (5, 6).

10. Colonne de direction selon la revendication 9, caractérisée en ce que le tronçon de paroi (20) prévu pour soutenir la tête de vis est fixé sur la partie formant coque (6) par des nervures (21).

11. Colonne de direction selon la revendication 1, caractérisée en ce qu'au moins une partie formant coque (6) présente, dans la direction de déplacement du volant (3), une ligne destinée à la rupture (17) suivant laquelle la partie formant coque (5) est susceptible d'être ouverte par rupture, du fait d'une sollicitation en flexion produite par le volant (3), respectivement par l'arbre de direction (2).

12. Colonne de direction selon la revendication 11, caractérisée en ce que la ligne destinée à la rupture (17) est sollicitée en flexion par un prolongement (18), associé au stator (11), de l'unité de contact du volant.
